# EUROPÄISCHE PATENTSCHRIFT

(11) **EP 0 531 824 B1**
(45) Veröffentlichungstag und Bekanntmachung des Hinweises auf die Patenterteilung: **25.01.1995**
(21) Anmeldenummer: 92114694.0
(22) Anmeldetag: 28.08.1992
(51) Int. Cl.: F16F 1/38, F16F 1/36

(54) **Elastische Befestigungsanordnung von Bauelementen an Bauteilen**
Elastic supporting element
Support élastique pour la fixation

(30) Priorität: 12.09.1991 DE 4130292
(43) Veröffentlichungstag der Anmeldung: 17.03.1993
(73) Patentinhaber: FORD-WERKE AKTIENGESELLSCHAFT, 50725 Köln (DE); FORD MOTOR COMPANY LIMITED, Brentwood, Essex CM13 3BW (GB); FORD FRANCE SOCIETE ANONYME, 92506 Rueil Malmaison Cedex (FR)
(72) Erfinder: Reinl, Hans-Georg, W-5010 Bergheim (DE)
(74) Vertreter: Messulam, Alec Moses

(56) Entgegenhaltungen:
- EP-A- 0 421 569
- DE-A- 3 036 418
- DE-A- 3 619 850
- DE-C- 3 128 340
- US-A- 4 288 063

## Beschreibung

Die Erfindung bezieht sich auf eine elastische Befestigungsanordnung von Bauelementen an Bauteilen, der im Oberbegriff des Patentanspruches 1 erläuterten Art.

Aus der DE-OS 30 36 418 ist eine elastische Befestigungsanordnung von Bauelementen an Bauteilen bekannt, wobei zwei senkrecht zu ihrer Längsachse getrennte elastische Hülsen mit einem inneren starren Rohrteil über einen sich durch den Rohrteil erstreckenden Befestigungsbolzen am Bauteil festlegbar sind und wobei die beiden elastischen Hülsenteile zwischen äußeren Flanschen eine außen umlaufende Ringnut bilden, in der der Rand einer Öffnung in einem Befestigungsflansch am Bauelement aufgenommen wird.

Die in den elastischen Hülsen angeordneten starren Rohrteile sind hierbei vorgesehen, um jeweils nur eine bestimmte axiale Verspannung der elastischen Hülsen sicherzustellen, die für eine gute schwingungsdämpfende Befestigung erwünscht ist.

Die bekannte Befestigungsanordnung weist den Nachteil auf, daß für das Halten der Rohrteile innerhalb der elastischen Hülsen aufwendige Verbindungsverfahren, wie Vulkanisieren oder Kleben, vorgeschlagen werden.

Aus der DE-PS 31 28 340 ist eine elastische Befestigungsanordnung von Bauelementen an Bauteilen bekannt, bei der eine elastische Hülse mit einem inneren starren Rohrteil zusammenwirkt und einen sich durch den Rohrteil erstreckenden Befestigungsbolzen am Bauteil festlegbar ist und das elastische Hülsenteil eine außen umlaufende Ringnut aufweist in der der Rand einer Öffnung in einen Befestigungsflansch am Bauelement aufgenommen wird.

Auch bei dieser Befestigungsanordnung ist nachteilig, daß zur Halterung des starren Rohrteiles innerhalb der elastischen Hülse nur ein aufwendiges Verkleben des Rohrteiles mit der Hülse aufgezeigt wird.

Darüber hinaus befaßt sich diese Patentschrift mit dem mehrschichtigen Aufbau der elastischen Hülse aus Materialien mit unterschiedlichem Elastizitätsmodulen.

Die Aufgabe der Erfindung ist es, eine elastische Befestigungsanordnung von Bauelementen an Bauteilen, der im Oberbegriff des Patentanspruches 1 aufgezeigten Art derart zu verbessern, daß bei elastischen Hülsen mit niedrigem Elastizitätsmodul, die ein Einknöpfen in die Öffnung am Befestigungsflansch zulassen, die elastische Hülse, wie bekannt, einteilig ausgeführt werden kann und erst durch nachträgliches Einsetzen des starren Rohrteiles die erwünschte Versteifung der elastischen Hülse und die Begrenzung der axialen Kompression erzielt werden kann, wohingegen bei elastischen Hülsen aus einem Material mit höherem Elastizitätsmodul eine zweiteilige Ausführung vorgeschlagen wird, die eine einfache Anordnung in der Öffnung am Befestigungsflansch am Bauelement ermöglicht, wobei durch das nachträgliche Einsetzen des Rohrteiles, der an seinem oberen Ende mit nach außen vorspringenden Kerben versehen ist, ein Wiederauseinanderfallen der Anordnung vermieden wird und darüber hinaus die erwünschte Begrenzung der axialen Kompression bei der Befestigung erzielt wird.

Gemäß der Erfindung wird diese Aufgabe gelöst, indem eine elastische Befestigungsanordnung von Bauelementen an Bauteilen, gemäß dem Oberbegriff des Patentanspruches 1 die im Kennzeichenteil des Patentanspruches 1 aufgezeigten Merkmale aufweist.

In den Ansprüchen 2 bis 6 sind weitere zweckmäßige Ausführungen der Erfindung erläutert.

Dadurch, daß das Rohrteil an seiner dem Kopf des Befestigungsbolzens abliegenden Ende mit einer großen Ausrundung oder einer kegeligen Aufweitung in einen Flansch übergeht und das Hülsenteil mit einem über diesen Flansch axial überstehenden Rand versehen ist, wird durch die Aufweitung eine erwünschte Versteifung der elastischen Hülse und eine sichere Begrenzung der axialen Kompression sichergestellt und durch den über den Flansch axial überstehenden Rand eine erhöhte Haftreibung am Bauteil erreicht.

Das Rohrteil kann hierbei an seinem oberen Ende mit radial nach außen kragenden Kerben versehen sein.

Das elastische Hülsenteil kann hierbei einteilig und in Draufsicht in verschiedenen Formen, wie rund, oval oder vierreckig, ausgebildet werden.

Vorzugsweise kann das Hülsenteil im Bereich seiner umlaufenden Ringnut senkrecht zu seiner Längsachse geteilt sein und das Rohrteil weist an seinem oberen Ende nach außen kragende Kerben auf, die sicherstellen, daß nachdem das zweiteilige Hülsenteil in der Öffnung im Befestigungsflansch am Bauelement eingesetzt wurde, durch das nachfolgende Einsetzen des Rohrteiles über die nach außen kargenden Kerben eine zuverlässige Verliersicherung gebildet wird.

Die Erfindung wird anhand zweier in den Zeichnungen gezeigter Ausführungsbeispiele näher erläutert. Es zeigt:
- Fig. 1: eine Seitenansicht mit teilweiser Schnittdarstellung einer Ausführungsform der Erfindung;
- Fig. 2: eine Draufsicht auf Fig. 1 bei entferntem Befestigungsflansch und entferntem Befestigungsbolzen;
- Fig. 3: einen vertikalen Schnitt durch eine einteilige Ausführungsform der Erfindung, wobei in der rechten Hälfte der entspannte Zustand und in der linken Hälfte der verspannte Zustand gezeigt ist und
- Fig. 4: einen ähnlichen vertikalen Schnitt wie Fig. 3 jedoch durch eine zweiteilige Ausführungsform der Erfindung.

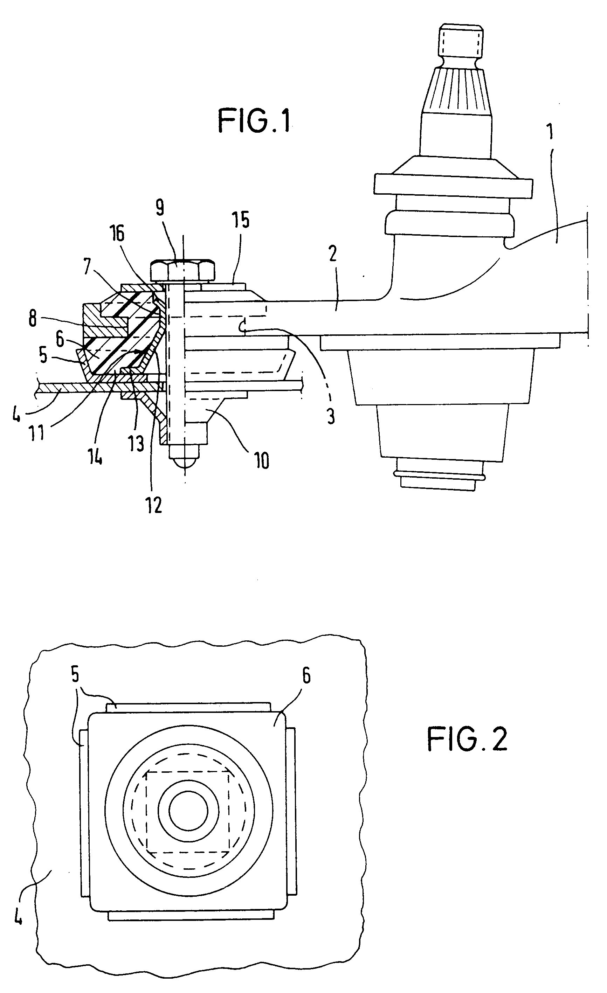

Die in Fig. 1 gezeigte Befestigungsanordnung dient zum schwingungsgedämpften Befestigen eines Bauelementes 1, z.B. eines Scheibenwischerkorsetts, an dem Aufnahmen für die Lagerzapfen der Wischerachsen vorgesehen sind und an dem ein Befestigungsflansch 2 ausgebildet ist, in dem eine Öffnung 3 vorgesehen ist. An einem Bauteil 4, z.B. einem Blechträger einer Kraftfahrzeugkarosserie ist im vorliegenden Fall eine viereckige Zentrieraufnahme 5 für eine viereckig ausgebildete elastische Hülse 6 vorgesehen.

Die elastische Hülse 6 weist eine innere zentrale Öffnung 7 auf, die einem starren Rohrteil angepaßt ist. Die elastische Hülse 6 weist eine außen umlaufende Ringnut 8 auf, die dem Rand der Öffnung 3 im Befestigungsflansch 2 des Bauelementes 1 angepaßt ist.

Die elastische Befestigungsanordnung weist einen Befestigungsbolzen 9 auf, der mit einer entsprechenden Mutter 10 am Bauteil 4 zusammenwirkt. Diese Mutter 10 kann eine lose in die Blechkonstruktion eingesetzte sogenannte Blechmutter sein oder sie kann als Hülsen-Trichtermutter oder -Schweißmutter ausgeführt sein.

Ein innerer starrer Rohrteil 11 ist mit einer großen Ausrundung oder einer kegeligen Aufweitung 12 ausgebildet, die in einen unteren Flansch 13 übergeht. Dadurch ergibt sich, daß der untere Teil der elastischen Hülse 6 verformungswilliger wird und dadurch einfacher in die Öffnung 8 eingeknöpft werden kann. Durch den danach eingesetzten starren Rohrteil 11 wird durch die kegelige Aufweitung 12 wieder eine festere Abstützung erzielt.

Die elastische Hülse 6 ist an ihrem unteren Ende mit einem den Flansch 13 in axialer Richtung übergreifenden Rand 14 versehen, der eine bessere Haftung am Bauteil 4 sicherstellt.

Der Befestigungsbolzen 9 kann mit einer getrennten Unterlegscheibe 15 oder einem entsprechend angeformten Flansch auf die elastische Hülse 6 einwirken.

Das starre Rohrteil 11 ist an seinem oberen Ende mit radial nach nach außen kragenden Kerben 16 versehen, die sicherstellen, daß das starre Rohrteil 11, nachdem es einmal in der elastischen Hülse 6 eingesetzt wurde, nicht mehr unbeabsichtigt herausfällt.

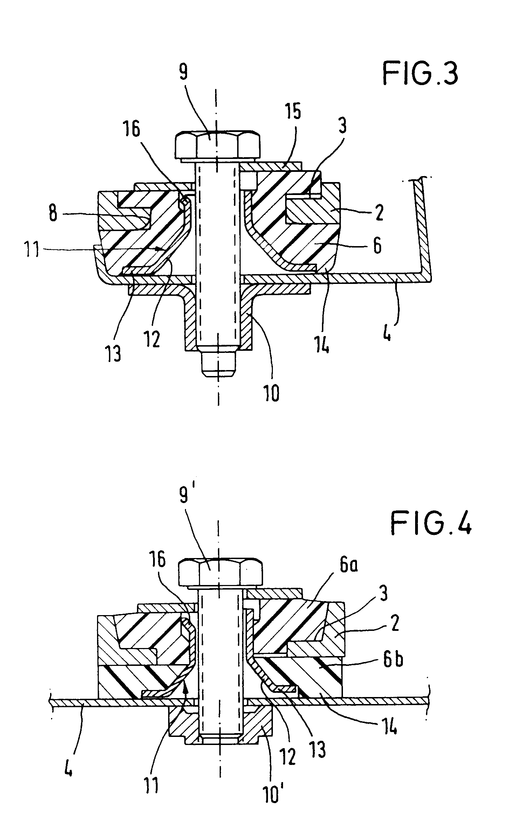

In Fig 3 ist eine elastische Befestigungsanordnung gemäß der Erfindung in einteiliger Ausführung gezeigt und dementsprechend sind die gleichen Bezugszeichen wie in Fig. 1 benutzt worden.

Wie aus der rechten Seite der Fig. 3 zu ersehen ist, ist die entspannte axiale Höhe der elastischen Hülse 6 um einiges größer als die axiale Höhe des starren Rohrteiles 11 und die der umlaufende Ringnut 8 benachbarte Kegelform der elastischen Hülse 6 erleichtert ein Einknöpfen derselben in die entsprechende Öffnung 3 in einem Bauteil 2. Die auch durch die Herstellung der elastischen Hülse 6 bedingten Toleranzen werden durch das Anziehen des Befestigungsbolzens 9 durch die Verformung des elastischen Materials weggedrückt, so daß eine spielfreie Befestigung zwischen dem Bauelement 1 und dem Bauteil 4 hergestellt wird.

Bei der in Fig. 4 gezeigten Ausführungsform der Erfindung ist die elastische Hülse 6a, 6b zweiteilig ausgebildet und die entsprechend abweichenden Bauteile sind mit den gleichen, jedoch mit einem Strichindex versehenen Bezugszeichen versehen.

Der Befestigungsflansch 2' mit einer Öffnung 3' eines Bauelementes soll wieder an einem Bauteil 4 befestigt werden.

Eine elastische Hülse besteht hierbei aus einem oberen scheibenförmigen Teil 6a und einem unteren scheibenförmigen Teil 6b und die Trennung senkrecht zur Längsachse des Befestigungsbolzens erfolgt vorzugsweise derart, daß sie parallel zu einer Wand des Befestigungsflansches 2' verläuft. Bei einer Anordnung einer zweiteiligen elastischen Hülse in einer Öffnung eines dünnwandigen Bleches muß die Trennung entlang einer konzentrisch zur Längsachse des Befestigungsbolzens vorlaufenden Zylinder erfolgen.

Die beiden Teile 6a und 6b der elastischen Hülse können auf einfache Weise in die Öffnung 3' im Befestigungsflansch 2' eingesetzt werden. Durch das nachträgliche, von unten erfolgende Einsetzen des starren Rohrteiles 11, der eine große Ausrundung oder eine kegelige Aufweitung 12 und einen Flansch 13 aufweist, wird mittels der an seinem oberen Ende ausgebildeten nach außen weisenden Kerben 16 eine als Verliersicherung wirkende elastische Verrastung der beiden Teile 6a und 6b erreicht.

Die in Zusammenhang mit dem starren Rohrteil 11 erläuterte große Ausrundung oder kegelige Aufweitung 12 bringt dreierlei Vorteile mit sich, erstens wird die Herstellung des mit einem Flansch versehenen Rohrteiles durch Ziehen erleichtert, zweitens macht die innere Kegelform der elastischen Hülse diese zum Zweck des Einknöpfens leichter verformbar und drittens sorgt die kegelförmige Aufweitung dafür, daß die Spannkraft des Befestigungsbolzens 9 bzw. 9' wesentlich sicherer und ohne die Gefahr eines Einknickens des Rohrteiles aufgenommen werden kann.

Selbstverständlich kann die Form des elastischen Hülsenteiles 6 und des starren Rohrteiles 11 in Draufsicht gesehen alle zweckmäßigen Formen, wie kreisrund, oval oder viereckig und dreieckig aufweisen.

## Patentansprüche

1. Elastische Befestigungsanordnung von Bauelementen an Bauteilen, in Form einer elastischen Hülse (6) mit einem inneren starren Rohrteil (11), die über einen sich durch den Rohrteil (11) erstreckenden Befestigungsbolzen (9) und eine Mutter (10) am Bauteil (4) festlegbar ist und wobei das elastische Hülsenteil (6) eine außen umlaufende Ringnut (8) aufweist oder bildet, in der der Rand einer Öffnung (3) in einem Befestigungsflansch (2) am Bauelement (1) aufgenommen wird,
**dadurch gekennzeichnet**, daß
- das Rohrteil (11) an seiner den Kopf des Befestigungsbolzens (9) abliegenden Ende mit einer großen Ausrundung oder einer kegeligen Aufweitung (12) versehen ist, die in einen Flansch (13) übergeht und
- das elastische Hülsenteil (6) mit einem über diesen Flansch (13) axial überstehenden Rand (14) versehen ist.

2. Befestigungsanordnung nach Anspruch 1,
**dadurch gekennzeichnet**, daß
- das Rohrteil (11) an seinem oberen Ende mit radial nach außen kargenden Kerben (16) versehen ist.

3. Befestigungsanordnung nach den Ansprüchen 1 und 2,
**dadurch gekennzeichnet**, daß
- das Hülsenteil (6) einteilig ist.

4. Befestigungsanordnung nach den Ansprüchen 1 und 2,
**dadurch gekennzeichnet**, daß
- das Hülsenteil (6) in Draufsicht kreisförmig oder oval ist.

5. Befestigungsanordnung nach den Ansprüchen 1 und 2,
**dadurch gekennzeichnet**, daß
- das Hülsenteil (6) in Draufsicht drei-, vier- oder mehreckig ist.

6. Befestigungsanordnung nach den Ansprüchen 1 und 2,
**dadurch gekennzeichnet**, daß
- das Hülsenteil (6a/6b) im Bereich seiner umlaufenden Ringnut (8) senkrecht zu seiner Längsachse geteilt ist.

## Claims

1. A resilient fastening means for fastening components to structural parts, in the form of a resilient sleeve (6) having a rigid inner tubular member (11) that can be held on to the structural part (4) by a mounting bolt (9) extending through the tubular member (11) and a nut (10), and wherein the resilient sleeve (6) has or forms an outer circumferential annular groove (8) to receive the rim of an opening (3) in a mounting flange (2) on the component (1), characterised in that
- the tubular member (11) is provided at its end remote from the head of the mounting bolt (9) with a large rounded corner or a conical flare (12) that merges into a flange (13) and
- the resilient sleeve (6) is provided with a rim (14) standing axially proud of this flange (13).

2. Fastening means according to claim 1,
characterised in that
- the tubular member (11) is provided at its upper end with notches (16) which spread radially outwards to form a collar.

3. Fastening means according to one of claims 1 and 2,
characterised in that
- the sleeve (6) is one-piece.

4. Fastening means according to one of claims 1 and 2
characterised in that
- the sleeve (6) is circular or oval when viewed in plan from above.

5. Fastening means according to one of claims 1 and 2,
characterised in that
- the sleeve (6), when viewed in plan, has three, four or more corners.

6. Fastening means according to one of claims 1 and 2,
characterised in that
- the sleeve (6a, 6b) is divided at right angles to its longitudinal axis in the region of its circumferential annular groove (8).

## Revendications

1. Disposition de fixation élastique pour fixer des pièces à des éléments de support, sous la forme d'un manchon élastique (6) contenant une portion de tube intérieure rigide (11), qui peut être fixée à l'élément de support (4) par le biais d'un boulon de fixation (9) s'étendant à travers la portion de tube (11) et d'un écrou (10), sachant que le manchon élastique (6) présente ou forme une rainure annulaire périphérique extérieure (8) dans laquelle vient se loger le bord d'une ouverture (3) située dans une bride de fixation (2) de la pièce (1), caractérisée en ce que
- la portion de tube (11) est munie à son extrémité opposée à la tête du boulon de fixation (9) d'un grand congé ou d'un élargissement conique (12) qui se transforme en une bride (13), et en ce que
- le manchon élastique (6) est muni d'un bord (14) faisant saillie axialement de cette bride (13).

2. Disposition de fixation selon la revendication 1, caractérisée, en ce que la portion de tube (11) est munie à son extrémité supérieure d'encoches (16) pointant radialement vers l'extérieur.

3. Disposition de fixation selon les revendications 1 et 2, caractérisée en ce que le manchon (6) est d'un seul tenant.

4. Disposition de fixation selon les revendications 1 et 2, caractérisée en ce que le manchon (6) vu du dessus est circulaire ou ovale.

5. Disposition de fixation selon les revendications 1 et 2, caractérisée en ce que le manchon (6) vu du dessus est triangulaire, quadrangulaire ou polygonal.

6. Disposition de fixation selon les revendications 1 et 2, caractérisée en ce que le manchon (6a/6b) est divisé perpendiculairement à son axe longitudinal dans la zone de sa rainure annulaire périphérique (8).
